# EUROPÄISCHE PATENTANMELDUNG

(11) **EP 0 582 061 A1**
(43) Veröffentlichungstag der Anmeldung: **09.02.1994**
(21) Anmeldenummer: 93108945.2
(22) Anmeldetag: 03.06.1993
(51) Int. Cl.: H04B 10/14

(54) **Kohärent optische Vielkanalanordnung**

(30) Priorität: 17.06.1992 DE 4219926
(71) Anmelder: SIEMENS AKTIENGESELLSCHAFT, D-80333 München (DE)
(72) Erfinder: Noll, Bernd, Dipl.-Ing., D-8000 München 21 (DE); Ebberg, Alfred, Dr., D-8000 München 83 (DE); Noé, Reinhold, Prof. Dr., D-4790 Paderborn (DE)

(57) **Zusammenfassung**

Es soll eine Stabilisierung des Frequenzabstandes zwischen den Trägerfrequenzkanälen der einzelnen Sender und damit eine Beseitigung der Gefahr eines Kanalnebensprechens für eine beliebig große Zahl von Sendern mit möglichst geringem Aufwand realisiert werden. Dazu wird für jede Gruppe (10) räumlich benachbarter optischer Sender 1, 2, ... n eine gemeinsame kohärent optische Überlagerungseinrichtung (2) für die Frequenzenstabilisierung aller Sender dieser Gruppe vorgesehen.

## Beschreibung

Die Erfindung betrifft eine kohärent optische Vielkanalanordnung nach dem Oberbegriff des Anspruchs 1.

Eine kohärent optische Vielkanalanordnung der genanntent Art ist aus IEEE Photonics Technology Lett., Vol. 1, Dez. 1989, Seiten 452 bis 454 bekannt. Um bei dieser Anordnung ein Nebensprechen zwischen den Trägerfrequenzkanälen mit dem geringen Frequenzabstand (beispielsweise von 5 bis 10 GHz) zu vermeiden, ist zur Stabilisierung des Frequenzabstandes der einzelnen Sender für jeden dieser Sender je eine eigene kohärent optische Überlagerungseinrichtung vorgesehen, so daß ebensoviele solche Überlagerungseinrichtungen wie Sender vorgesehen sind.

Bei dieser bekannten Anordnung wird von einem Referenzlaser ein Referenzkammspektrum, beispielsweise mit Hilfe eines externen Modulators erzeugt, wobei die Referenzfrequenzlinien dieses Referenzkammspektrums in einem Frequenzabstand voneinander angeordnet sind, der gleich dem geringen Frequenzabstand zwischen den Trägerfrequenzkanälen entspricht. In jeder einem Sender zugeordneten Überlagerungseinrichtung, beispielsweise ein Heterodynempfänger, wird ein Anteil des von diesem Sender emittierten optischen Informationssignals mit dem Licht der zu diesem Sender gehörenden Referenzfrequenzlinie des Referenzkammspektrums überlagert, wobei die feste Referenzfrequenz dieser Referenzfrequenzlinie gleich der Kanalträgerfrequenz des Trägerfrequenzkanals dieses Senders ist. Über eine Phasen- oder Frequenzregelschleife wird die Kanalträgerfrequenz des Sendelasers bei einer Frequenzabweichung so nachgeregelt, daß die in dem durch die Überlagerung des Anteils des Informationssignals dieses Senders mit dem Licht der dazugehörenden Referenzfrequenzlinie der zu diesem Sender gehörenden Überlagerungseinrichtung enthaltene Zwischenfrequenz, die gleich einer Differenz zwischen der Kanalträgerfrequenz dieses Senders und der Referenzfrequenz dieser Referenzfrequenzlinie ist, konstant bleibt.

Da bei dieser bekannten Anordnung für jeden Sender eine eigene Übertragungseinrichtung vorgesehen werden muß, ist bei einer solchen Anordnung mit vielen Sendern, beispielsweise bei optischer Raum- und Frequenzvermittlung oder einem TV-Verteilsystem mit kohärenter Technik ein beträchtlicher Aufwand zur Frequenzregelung nötig.

Der Erfindung liegt die Aufgabe zugrunde, eine Stabilisierung des Frequenzabstandes zwischen den Trägerfrequenzkanälen der einzelnen Sender und damit eine Beseitigung der Gefahr eines Nebensprechens zwischen den Trägerfrequenzkanälen für eine beliebig große Zahl von Sendern mit möglichst geringem Aufwand zu realisieren.

Diese Aufgabe wird ausgehend von einer Vielkanalanordnung der eingangs genannten Art durch die im kennzeichnenden Teil des Anspruchs 1 angegebenen Merkmale gelöst.

Die erfindungsgemäße Anordnung hat den Vorteil, daß für jede Gruppe von räumlich benachbarten Sendern eine gemeinsame kohärent optische Überlagerungseinrichtung für die Frequenzregelung verwendet wird, wodurch die Zahl dieser Überlagerungseinrichtungen beträchtlich reduziert ist. Die erfindungsgemäße Anordnung hat aber auch den Vorteil, daß nicht nur räumlich eng benachbarte Sender, sondern auch räumlich weit voneinander befindliche Sender stabilisiert werden können. Mehrere verschiedene Gruppen Sender können die gleiche oder verschiedene Anzahl Sender aufweisen.

Das Filtersignal aus der Filtereinrichtung kann mit phasenempfindlicher Gleichrichtung weiterverarbeitet werden. Bevorzugter- und vorteilhafterweise ist eine erfindungsgemäße Anordnung so ausgebildet, wie es im Anspruch 2 angegeben ist.

Vorteilhafterweise weist im Fall nach Anspruch 2 der Wandler der Kontrolleinrichtung für jedes einzelne Überlagerungssignal jedes Senders einer Gruppe eine Wandlercharakteristik auf, bei welcher die Amplitude des vom Wandler abgegebenen Amplitudensignals sowohl bei gegenüber jeder Kanalträgerfrequenz zunehmender als auch bei der gegenüber abnehmender Modulationsfrequenz des von diesem Sender emittierten Informationssignals monoton mit der Zunahme als auch der Abnahme dieser Modulationsfrequenz ansteigt.

Insbesondere in dem Fall, daß die frequenzmodulierten Informationssignale binäre Signale sind, die nur zwei Modulationsfrequenzzustände einnehmen können, ist es zweckmäßig, wenn sich diese beiden Modulationsfrequenzzustände im gleichen Frequenzabstand links und rechts von der betreffenden Kanalträgerfrequenz befinden. In diesem Fall ist es vorteilhaft, wenn die Charakteristik des Wandlers bei diesen Frequenzabständen die gleiche Amplitude aufweist, so daß zwangsläufig eine in dem betreffenden einzelnen Überlagerungssignal des Mehrfachüberlagerungssignals enthaltene Zwischenfrequenz sowohl für den den einen Binärwert als auch den den anderen Binärwert anzeigenden Modulationsfrequenzzuständ des Informationssignals gleich ist.

Besonders vorteilhaft ist es, wenn die in sämtlichen einzelnen Überlagerungssignalen enthaltenen Zwischenfrequenzen untereinander gleich sind, da dann in Bezug auf die Filtereinrichtung nur eine Zwischenfrequenz in Betracht gezogen werden muß.

Die Regelgeschwindigkeit der erfindungsgemäßen Anordnung kann vorteilhafterweise dadurch erhöht werden, daß das Kennungssignal des Trägerfrequenzkanals eines Senders nicht nur aus einer Grundwelle der Wiederholfrequenz, sondern auch aus einer zumindest die doppelte Wiederholfrequenz enthaltenden Oberwelle zusammengesetzt ist. Die Erhöhung der Regelgeschwindigkeit wird durch gleichzeitige Detektion sowohl der Grundwelle als auch der Welle mit der doppelten Wiederholfrequenz erreicht. Dieses Verfahren ist insbesondere bei großen Änderungen der Kanalträgerfrequenz vorteilhaft.

Vorzugsweise ist das Kennungssignal eines Trägerfrequenzkanals keine Sinuswelle sondern eine rechteckförmige Welle, in der die doppelte Wiederholfrequenz enthalten ist, wobei ein Vorteil der rechteckförmigen Welle darin besteht, daß diese Welle durch digitale Schaltkreise auf einfache Weise erzeugt werden kann.

Das Referenzkammspektrum wird vorzugsweise durch einen Kammgenerator erzeugt. Dabei kann es vorteilhaft sein, wenn für mehrere kohärent optische Überlagerungseinrichtungen, die verschiedenen Gruppen räumlich benachbarter Sender oder einem oder mehreren von einer Gruppe solcher Sender weiter entfernten Sendern zugeordnet sind, ein gemeinsamer Kammgenerator zur Erzeugung eines Referenzlinien mit Referenzfrequenzen für die Kanalträgerfrequenzen sämtlicher Sender enthaltenden Referenzkammspektrums vorgesehen ist.

Die Erfindung wird anhand der Figuren beispielhaft näher erläutert. Es zeigen:
- Figur 1: ein Blockschaltbild eines Ausführungsbeispiels einer erfindungsgemäßen Vielkanalanordnung in vereinfachter Darstellung,
- Figur 2: die frequenzmäßige Lage der Modulationsspektren der von verschiedenen Sendern emittierten frequenzmodulierten Informationssignale in Bezug auf die Kanalträgerfrequenzen der verschiedenen Sender,
- Figur 3: eine bevorzugte Wandlercharakteristik eines Wandlers des Ausführugnsbeispiels für eine ausgewählte Kanalträgerfrequenz, wobei die Amplitude des Amplitudensignals in Abhängigkeit von der Modulationsfrequenz des zu dieser Kanalträgerfrequenz gehörenden Informationssignals gezeigt ist, und
- Figuren 4a bis 4c: untereinander die Wandlercharakteristik nach Figur 3, das Ausgangssignal des Wandlers bei Detektion der Grundwelle des Kennungssignals des ausgewählten Trägerfrequenzkanals und das Ausgangssignal des Wandlers bei Detektion der ersten Oberwelle des Kennungssignals mit der doppelten Wiederholfrequenz.

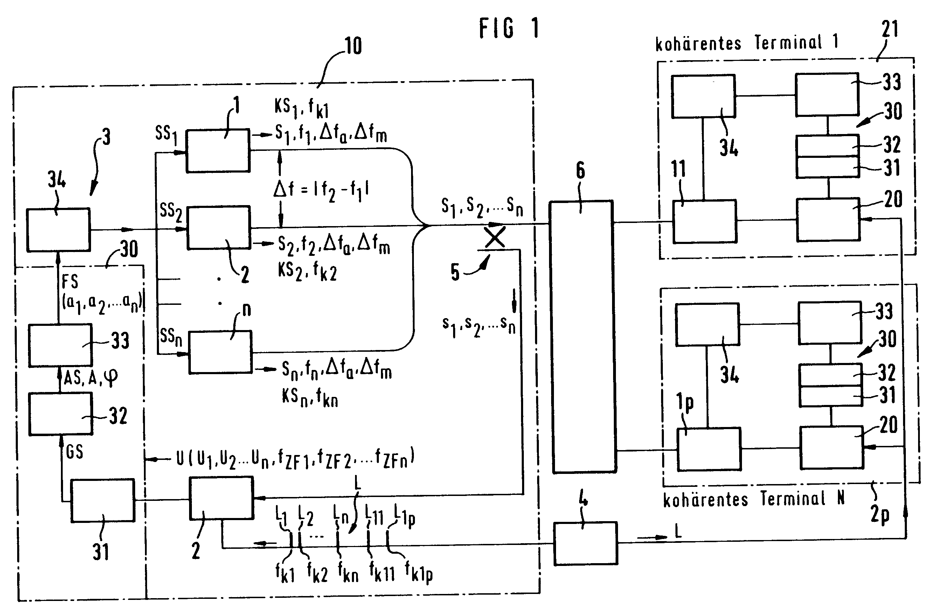

Das in der Figur 1 dargestellte Ausführungsbeispiel weist eine Gruppe 10 räumlich eng benachbarter optischer Sender 1, 2, ... n und mehrere Empfänger 21, ... 2p auf. Es können mehrere solcher Gruppen 10 vorhanden sein, wobei die Zahl der Sender 1, 2, ... n von Gruppe 10 zu Gruppe 10 gleich oder verschieden sein kann. Beispielsweise kann eine Gruppe 10 eine TV-Verteilstation sein.

Jeder Sender 1, 2, ... bzw. n einer Gruppe 10 sendet optische Informationssignale S₁, S₂, ... bzw. Sₙ auf einem diesem Sender 1, 2, ... bzw. n zugeordneten Trägerfrequenzkanal mit einer Kanalträgerfrequenz f₁, f₂, ... bzw. fₙ aus, die mit einer Modulationsfrequenz fₘ aus einem vorbestimmten Modulationsfrequenzbereich Δfm, der einem großen Frequenzhub entspricht, frequenzmoduliert sind. Die Kanalträgerfrequenzen f₁, f₂, ... bzw. fₙ der verschiedenen Sender 1, 2, ... n sind voneinander verschieden und weisen einen Kanalfrequenzabstand Δf auf, der von Kanalträgerfrequenz zu Kanalträgerfrequenz gleich oder verschieden sein kann.

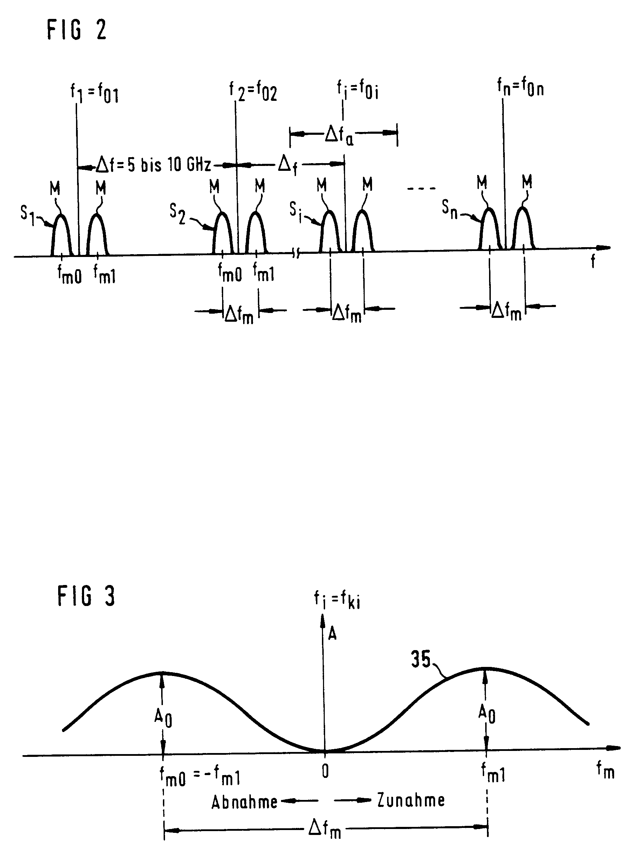

In der Figur 2 sind die Kanalträgerfrequenzen f₁, f₂, ... fᵢ ... fₙ für die Informationssignale S₁, S₂, ... Sᵢ, ... Sₙ der verschiedenen Sender 1, 2, ... n auf einer Frequenzachse f in dem Kanalfrequenzabstand Δf voneinander dargestellt. Die beiden Höcker M links und rechts von jeder Kanalträgerfrequenz f₁, f₂, ... bzw. fₙ sind das Modulationsfrequenzspektrum des frequenzmodulierten Informationssignals S₁, S₂, ... bzw. Sₙ, das dieser Kanalträgerfrequenz f₁, f₂, ... bzw. fₙ aufmoduliert ist.

Wenn der Kanalfrequenzabstand Δf sehr gering ist, beispielsweise nur 5 bis 10 GHz beträgt, besteht die Gefahr eines Kanalnebensprechens, das durch Instabilitäten der Sender 1, 2, ...n während deren Betriebs verursacht werden kann. Die Kanalträgerfrequenzen f₁, f₂, ... fₙ sind dann auf der Frequenzachse f in Figur 2 nicht fest sondern weisen Frequenzänderungen Δfₐ auf. Dies bedeutet, daß eine Kanalträgerfrequenz, beispielsweise die Kanalträgerfrequenz fᵢ in Figur 2 (i = 1, 2, ... n) in einem vom Sender, der diese Frequenz fᵢ erzeugt, abhängigen Frequenzbereich Δfₐ, der variabel und von Sender zu Sender verschieden sein kann, wandert.

Um diese Frequenzänderungen Δfₐ auszuschalten und zu bewirken, daß die Kanalträgerfrequenzen f₁, f₂, ... fₙ konstant sind und auf der Frequenzachse f in Figur 2 festliegen, wird das von jedem Sender 1, 2, ... bzw. n einer Gruppe 10 emittierte frequenzmodulierte Informationssignal S₁, S₂, ... bzw. Sₙ zusätzlich mit einem periodischen Kennungssignal KS₁, KS₂, ... bzw. KSₙ einer diesem Sender 1, 2, ... bzw. n individuell zugeordenten festen Wiederholfrequenz fₖ₁, fₖ₂, ... bzw. fₖₙ zur Identifizierung des Trägerfrequenzkanal dieses Senders 1, 2, ... bzw. n frequenzmoduliert ist.

Außerdem ist eine dieser Gruppe 10 Sender 1, 2, ... n gemeinsam zugeordnete kohärent optische Überlagerungseinrichtung 2 zum Empfang von Anteilen s₁, s₂, ... sₙ der von allen Sendern 1, 2, ... n dieser Gruppe 10 auf den verschiedenen Kanalträgerfrequenzen f₁, f₂, ... fₙ emittierten Informationssignale S₁, S₂, ...Sₙ und zum Erzeugen eines aus einzelnen Überlagerungssignalen U₁, U₂, ... Uₙ bestehenden Mehrfachüberlagerungssignals U vorgesehen.

Die Anteile s₁, s₂, ... sₙ werden beispielsweise mittels eines optischen Richtkopplers 5 gewonnen, dem sämtliche Informationssignale S₁, S₂, ... Sₙ zugeführt sind. Die einzelnen Überlagerungssignale U₁, U₂, ... Uₙ werden in der Überlagerungseinrichtung 2 durch Überlagerung des Anteils s₁, s₂, ... bzw. sₙ jedes dieser Informationssignale S₁, S₂, ... Sₙ mit dem Licht der bei der Kanalträgerfrequenz f₁, f₂, ... bzw. fₙ dieses Informationssignals S₁, S₂, ... bzw. Sₙ liegenden Referenzfrequenzlinie L₁, L₂, ... bzw. Lₙ ein eines dieser Gruppe 10 Sender 1, 2, ... n zugeordneten und jeder Kanalträgerfrequenz f₁, f₂, ... bzw. fₙ jedes Senders 1, 2, ... bzw. n dieser Gruppe 10 jeweils eine Referenzfrequenzlinie L₁, L₂, ... bzw. Lₙ mit einer Referenzfrequenz f₀₁, f₀₂, ... bzw. f₀ₙ aufweisenden Referenzkammspektrums L gebildet.

Das Referenzkammspektrum L wird vorzugsweise von einem Kammgenerator 4 erzeugt.

Die Referenzfrequenzen f₀₁, f₀₂, ... bzw. f₀ₙ weisen keine Schwankungen auf und liegen auf der Frequenzachse f in Figur 2 fest. In Bezug auf diese Figur 2 ist ohne Beschränkung der Allgemeineheit angenommen, daß jede Kanalträgerfrequenz f₁, f₂, ... fₙ, wenn keine Frequenzänderung Δfₐ dieser Frequenz vorliegt, mit der zugeordneten Referenz f₀₁, f₀₂, ... bzw. f₀ₙ der betreffenden Referenzfrequenzlinie L₁, L₂, ...bzw. Lₙ des Referenzkammspektrums L zusammenfällt.

Darüberhinaus ist eine Kontrolleinrichtung 3 vorgesehen, die eine mit dem Mehrfachüberlagerungssignal U oder einem entsprechenden, nach einer optoelektrischen Wandlung gewonnenen Mehrfachüberlagerungssignal beaufschlagte Filtereinrichtung 30 aufweist, welche für die in dem Mehrfachüberlagerungssignal U enthaltenen Wiederholfrequenzen fₖ₁, fₖ₂, ... fₖₙ der Kennungssignale KS₁, KS₂, ... KSₙ und Frequenzänderungen Δfₐ der Kanalträgerfrequenzen f₁, f₂, ... fₙ, nicht aber für die höheren sonstigen in dem Mehrfachüberlagerungssignal U enthaltenen Frequenzen einschließlich der Kanalträgerfrequenzen f₁, f₂, ... fₙ der Trägerfrequenzkanäle der Sender 1, 2, ... n dieser Gruppe und der Modulationsfrequenzen fₘ der frequenzmodulierten Informatiosnsignale S₁, S₂, ... Sₙ durchlässig ist und eine Information über diese Wiederholfrequenzen fₖ₁, fₖ₂, ... fₖₙ, diese Frequenzänderungen Δfₐ und die Zuordnung dieser Frequenzänderungen Δfₐ zu diesen Wiederholfrequenzen fₖ₁, fₖ₂, ... fₖₙ enthaltendes Filtersignal FS abgibt.

Außerdem weist die Kontrolleinrichtung 3 eine Steuereinrichtung 34 zur Erzeugung je eines Steuersignals SS1, SS2, ... bzw. SSn für jeden Sender 1, 2, ... bzw. n dieser Gruppe 10 zur Steuerung der Kanalträgerfrequenz f₁, f₂, ... bzw. fₙ dieses Senders 1, 2, ... bzw. n in Abhängigkeit von der in dem Filtersignal FS enthaltenen Information über die Kennfrequenz fₖ₁, fₖ₂, ... bzw. fₖₙ dieses Senders 1, 2, ... bzw. n und über die dieser Kennfrquenz f₁, f₂, ... bzw. fₙ zugeordnete Frequenzänderung Δfₐ der Kanalträgerfrequenz f₁, f₂, ... bzw. fₙ dieses Senders 1, 2, ... n derart, daß eine vorhandene Frequenzänderung Δfₐ der Kanalträgerfrequenz f₁, f₂, ... bzw. fₙ dieses Senders 1, 2, ... n aufgehoben wird, auf.

Dadurch wird bewirkt, daß die Kanalträgerfrequenz f₁, f₂, ... bzw. fₙ jedes Senders 1, 2, ... bzw. n sich nicht mehr ändert und bei der zugeordneten Referenzfrequenz f₀₁, f₀₂, ... bzw. f₀ₙ des Referenzkammspektrums L festgebunden wird.

Ein Regelsignal zur Nachführung der Kanalträgerfrequenz f₁, f₂, ... bzw. fₙ jedes Senders 1, 2, ... bzw. n der Gruppe 10 kann aus dem Filtersignal FS durch phasenempfindliche Gleichrichtung, beispielsweise mit Lock-In-Detektion, bei jeder Kennfrequenz fₖ₁, fₖ₂, ... bzw. fₖₙ abgeleitet werden. Ein einfacheres Verfahren führt eine schnelle Fourier-Transformation durch, wobei Betrag und Phase der detektierten Kennfrequenzen fₖ₁, fₖ₂, ... fₖₙ als Werte vorliegen und zur Frequenznachführung verwendet werden können. Dazu weist vorzugsweise die Filtereinrichtung 30 der Kontrolleinrichtung 3 ein mit dem Mehrfachüberlagerungssignal U oder dem entsprechend optoelektrisch gewandelten Mehrfachüberlagerungsignal beaufschlagtes Filter 31 auf, welches für die in dem Mehrfachüberlagerungssignal U enthaltenen Wiederholfrequenzen fₖ₁, fₖ₂, ... fₖₙ der Kennungssignale KS₁, KS₂, ... bzw. KSₙ und die Frequenzänderungen Δfₐ der Kanalträgerfrequenzen f₁, f₂, ... bzw. fₙ, nicht aber für die höheren sonstigen in dem Mehrfachüberlagerungssignal U enthaltenen Frequenzen einschließlich der Kanalträgerfrequenzen f₁, f₂, ... fₙ und der Modulationsfrequenzen fₘ der Informationssignale S₁, S₂, ... Sₙ durchlässig ist und ein diese Wiederholfrequenzen fₖ₁, fₖ₂, ... fₖₙ und diese Frequenzänderungen Δfₐ enthaltendes gefiltertes Signal GS abgibt. Außerdem ist ein Wandler 32 zum Umwandeln des gefilterten Signals GS in ein Amplitudensignal AS mit einer von dem in dem gefilterten Signal GS enthaltenen Frequenzabweichungen Δfₐ der Kanalträgerfrequenzen f₁, f₂, ... fₙ und den Wiederholfrequenzen fₖ₁, fₖ₂, ... fₖₙ der Kennungssignale KS₁, KS₂, ... KSₙ abhängigen Amplitude A und/oder Phase φ vorgesehen. Darüberhinaus ist eine Einrichtung 33 zur Erzeugung des Filtersignals FS in Form einer Fourier-Transformierten des Amplitudensignals AS mit den Wiederholfrequenzen fₖ₁, fₖ₂, ... fkn eindeutig zugeordneten Fourier-Koeffizienten a₁, a₂, ...bzw. aₙ vorgesehen, wobei jeder Fourier-Koeffizient a₁, a₂, ...bzw. aₙ eine Information über eine Frequenzabweichung Δfₐ der zur Wiederholfrequenz fₖ₁, fₖ₂, ... bzw. fₖₙ dieses Fourier-Koeffizienten a₁, a₂, ...bzw. aₙ gehörenden Kanalträgerfrequenz f₁, f₂, ... bzw. fₙ enthält.

Die Fourier-Transformation kann vorteilhafterweise mit einem Rechner, beispielsweise einem Personal Computer, durchgeführt werden.

Bei einer Realisierung des Ausführungsbeispiels nach Figur 1 wurde ein Referenzlaser unter Verwendung eines LiNbO₃-Phasenmodulators mit einer periodischen Elektrodenstruktur moduliert. Eine Antriebsleistung von 1 W bei 10,368 GHz reichte zur Erzeugung von sieben Referenzlinien des Referenzkammspektrums aus. Die Frequenz des Referenzlasers wurde stabilisiert. Die einzelnen Sender wurden durch Kennungssignale mit einer Wiederholfrequenz von wenigen kHz, beispielsweise etwa 6 kHz, gekennzeichnet, wobei sich die Wiederholfrequenzen um einige 10 MHz, beispielsweise 60 MHz voneinander unterschieden. Das vom Wandler 32 abgegebene Amplitudensignal wurde auf seine Amplitude und Phase abgetastet und ein Rechner berechnete die Fourier-Transformierte dieses Amplitudensignals. Der mit einer speziellen Wiederholfrequenz korrespondierende Fourier-Koeffizient der Fourier-Transformierten wurde durch eine komplexe Referenzkonstante dividiert, so daß der Realteil des Quotienten proportional zur Frequenzänderung der Kanalträgerfrequenz des dieser Wiederholfrequenz zugeordneten Senders von der Referenzfrequenz der betreffenden Referenzfrequenzlinie des Referenzkammspektrums ist. Die Referenzkonstante wurde gleich dem Fourier-Koeffizienten gewählt, der früher in Gegenwart einer gewollten und bekannten Frequenzänderung der Kanalträgerfrequenz des betreffenden Senders gewählt und diente zur Eichung. Mit der beschriebenen Methode können alle Sender parallel stabilisiert werden, da die Berechnung der Fourier-Transformierten und der Korrektur der Frequenz für alle Sender gleichzeitig ausgeführt werden kann.

Wenn die frequenzmodulierten Informationssignale binäre Signale sind, ist es zweckmäßig, wenn der Wandler 32 für jedes einzelne Überlagerungssignal U₁, U₂, Uₙ jedes Senders 1, 2, ... bzw. n jeder Gruppe 10 eine Wandlercharakteristik 35 (siehe Figur 3) aufweist, bei welcher die Amplitude A des vom Wandler 32 abgegebenen Amplitudensignals AS sowohl bei gegenüber jeder Kanalträgerfrequenz f₁, 2₂, ...bzw. fₙ zunehmender als auch bei der gegenüber abnehmender Modulationsfrequenz fₘ des von diesem Sender 1, 2, ... bzw. n emittierten Informationssignals S₁, S₂, ... bzw. ₙ monoton mit der Zunahme als auch mit der Abnahme dieser Modulationsfrequenz fₘ ansteigt, und bei stimmten Frequenzabständen fₘ₀, fₘ₁ der Modulationsfrequen fₘ jedes von einem Sender 1, 2, ... n emittierten Informationssignals S₁, S₂, ... bzw. Sₙ von der Kanalträgerfrequenz f₁, f₂, ... bzw. fₙ dieses Senders 1, 2, ... n die gleiche Amplitude a₀ aufweist. In der Figur 3 ist eine solche Charakteristik für die Kanalaträgerfrequenz fi mit i = 1, 2, ..., n dargestellt. Den bestimmten Frequenzabständen fm0 und fm1 werden die beiden Binärwerte des frequenzmodulierten Sendesignals zugeordnet. Diese Charakteristik hat den Vorteil, daß für beide Binärwerte des binären Signals das gleiche Zwischenfrequenzsignal empfangen wird, wenn die Kanalträgerfrequenz des betreffenden Senders in Bezug auf das Modulationsfrequenzspektrum M zentriert ist, so wie es in der Figur 2 angedeutet ist.

Zweckmäßig ist es auch, wenn in sämtlichen einzelnen Überlagerungssignalen U₁, U₂, ... bzw. Uₙ enthaltene Zwischenfrequenzen f_{ZF1}, f_{ZF2} ... bzw. f_{ZFn}, die jeweils gegeben sind durch eine Differenz zwischen der Kanalträgerfrequenz f₁, f₂, ... bzw. fₙ und der Referenzfrequenz f₀₁, f₀₂, ... bzw. f₀ₙ jedes einzelnen Überlagerungssginals U₁, U₂, ... bzw. Uₙ, untereinander gleich sind. Dies vereinfacht die Filterung des Mehrfachüberlagerungsignals U.

Eine Erhöhung der Regelgeschwindigkeit, insbesondere bei großen Abweichungen der Zwischenfrequenz von einer Sollzwischenfrequenz aufgrund von Instabilitäten von Sendern kann durch gleichzeitige Detektion sowohl der Grundwelle mit der Wiederholfrequenz fₖ₁, fₖ₂, ... bzw. fₖₙ des Kennungssignals als auch der Oberwelle mit der doppelten Wiederholfrequenz 2fₖ₁, 2fₖ₂, ... bzw. 2fₖₙ des Kennungssignals erreicht werden.

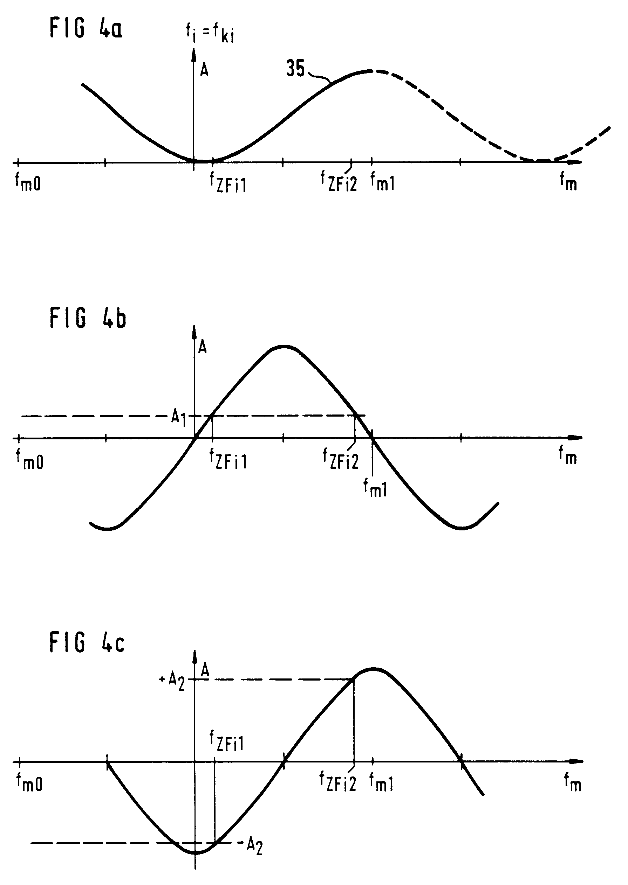

Wie aus der Figur 4b hervorgeht, ist es möglich, daß die alleinige Detektion der Grundwelle des Kennungssignals keine Aussage darüber möglich ist, ob eine Zwischenfrequenz f_{ZFi1} oder f_{ZFi2} beträgt, da in beiden Fällen die gleiche Amplitude A₁ detektiert wird.

Betrachtet man gleichzeitig die Oberwelle nach Figur 4c mit der doppelten Wiederholfrequenz, so gibt die Polarität der Amplitude A₂ bei diesen Zwischenfrequenzen fZFi1 bzw. fZFi2 eindeutig an, welche dieser beiden Zwischenfrequenzen vorliegt. Diese Zusatzinformation kann für eine beschleunigte Regelung auf die Sollfrequenz der Zwischenfrequenz verwendet werden.

Wenn das Kennungssignal des Trägerfrequenzkanals eines Senders eine rechteckförmige Welle ist, hat dies den Vorteil, daß diese Welle durch digitale Schaltkreise auf einfache Weise erzeugt werden kann, und daß die Oberwelle mit der doppelten Wiederholfrequenz dieser rechteckförmigen Welle enthalten sein kann.

Vorteilhaft ist es auch, wenn für mehrere kohärent optische Überlagerungseinrichtungen die verschiedenen Gruppen 10 räumlich benachbarter Sender 1, 2 ... n oder einem oder mehreren von einer Gruppe 10 solcher Sender 1, 2, ... n räumlich weiter entfernten Sendern 11, ... 1p zugeordnet sind, ein gemeinsamer Kammgenerator 4 zur Erzeugung eines Referenzlinien L₁, L₂, ... Lₙ, L₁₁, ... L₁ₚ mit Referenzfrequenzen fₖ₁, fₖ₂, ... fₖₙ, fₖ₁₁, ... fₖ₁ₚ für die Kanalträgerfrequenzen sämtlicher Sender 1, 2, ... n, 11, ... 1p enthaltenden Referenzkammspektrums L vorgesehen ist.

Beim Ausführungsbeispiel nach Figur 1 für die Sender 1, 2, ... n der Gruppe 10 und für Überlagerungseinrichtungen 20 in Empfängern 21, ... 2p ein solcher gemeinsamer Kammgenerator 4 vorgesehen. Jeder Empfänger 21, ... bzw. 2p ist beispielsweise ein kohärent optisches Terminal, dem die Informationssignale der Gruppe 10 in Form einer TV-Verteilstation zugeleitet sind. Jeder eigentliche Empfänger 11, ... 1p jedes Empfängers 21 .. bzw. 2p ist zugleich ein Sender, der ein optisches Signal zu der in diesem Empfänger 21 ... bzw. 2p enthaltenen kohärent optischen Überlagerungseinrichtung 20 sendet. In dieser Überlagerungseinrichtung 20 wird dieses Signal mit dem Licht der Referenzlinie fₖ₁₁, ... bzw. fₖ₁ₚ und aus dem betreffenden Überlagerungssignal ein steuersignal zur Stabilisierung des betreffenden Senders 11, ... bzw. 1p abgeleitet, was auf ähnliche Weise, wie für die Sender der Gruppe 10 geschehen kann. Da im Ausführungsbeispiel jeder Empfänger 21, ... bzw. 2p nur einen Sender 11, ... bzw. 1p aufweist, ist die Ableitung dieses Steuersignals zur Stabilisierung des Senders im Vergleich zur Gruppe 10 Sender 1, 2, ... n einfacher. Die von diesen Sendern 1, 2, ... n ausgesandten Informationssignale S₁, S₂ ... Sₙ werden zusammengefaßt beispielsweise einem optischen Sternkoppler 6 zugeleitet, der diese Signale auf die verschiedenen Empfänger 21, .. 2p verteilt. Die Anteile s₁, s₂, ... sn können, wie im Beispiel nach Figur 1 gezeigt, vor diesem Sternkoppler 6, aber auch nach diesem Sternkoppler 6 gewonnen werden.

## Patentansprüche

1. Kohärent optische Vielkanalanordnung aus mehreren räumlich verteilten, mit einer Modulationsfrequenz (fₘ) aus einem vorbestimmten Modulationsfrequenzbereich (Δfₘ) frequenzmodulierte optische Informationssignale (S₁, S₂, ...Sₙ) auf Trägerfrequenzkanälen mit voneinander verschiedenen Kanalträgerfrequenzen (f₁, f₂,... fₙ) sendenden optischen Sendern (1, 2, ...n), wobei die verschiedenen Kanalträgerfrequenzen (f₁, f₂,... fₙ) einen derart geringen Kanalfrequenzabstand (Δf) voneinander aufweisen, daß bei durch Instabilitäten während des Betriebs eines oder mehrerer Sender (1, 2, ...n) verursachten Frequenzänderungen (Δfₐ) der Kanalträgerfrequenzen (f₁, f₂,... fₙ) die Gefahr eines Nebensprechens zwischen den Trägerfrequenzkanälen besteht, und wobei die mehreren Sender (1, 2, ...n) eine oder mehrere räumlich voneinander getrennte Gruppen (10) aus jeweils mehreren räumlich benachbarten Sendern (1, 2, ... n) bilden,
- wobei für jeden Sender (1, 2, bzw. n) eine kohärent optische Überlagerungseinrichtung (2) zum Empfang zumindest eines Anteils (s₁, s₂, ...bzw. sₙ) des von diesem Sender (1, 2 ...bzw. n) auf dem Trägerfrequenzkanal dieses Senders (1, 2, ... bzw. n) emittierten Informationssignals (S₁, S₂, ... bzw. Sₙ) und zur Erzeugung eines optischen Überlagerungssignals (U₁, U₂, ... bzw. Uₙ) durch Überlagerung dieses Anteils (s₁, s₂, ... bzw. sₙ) mit dem Licht einer bei der Kanalträgerfrequenz (f₁, f₂,...bzw. fₙ) dieses Informationssignals (S₁, S₂, bzw. Sₙ) liegenden, frequenzmäßig festliegenden Referenzfrequenzlinie (L₁, L₂, ... bzw. Lₙ) eines aus mehreren frequenzmäßig festliegenden Referenzfrequenzlinien (L₁, L₂, ... Lₙ) mit bei verschiedenen Kanalträgerfrequenzen (f₁, f₂, ...fₙ) liegenden und in dem geringen Kanalfrequenzabstand (Δf) voneinander angeordneten festen Referenzfrequenzen (f₀₁, f₀₂,... f₀ₙ) bestehenden optischen Frequenzkammspektrums (L) vorgesehen ist, und
- wobei eine Kontrolleinrichtung (3) zum Regeln der Kanalträgerfrequenz (f₁, f₂,... fₙ) jedes optischen Senders (1, 2, ... bzw. n) in Abhängigkeit von dem durch Überlagerung des Anteils (s₁, s₂, ... sₙ) des von diesem Sender (1, 2, ... bzw. n) mit der Kanalträgerfrequenz (f₁, f₂,... fₙ) dieses Senders (1, 2, ... bzw. n) emittierten Informationssignals (S₁, S₂, ...bzw. Sₙ) mit dem Licht der bei dieser Kanalträgerfrequenz (f₁, f₂,...bzw. fₙ) liegenden Referenzfrequenzlinie (L₁, L₂, ... bzw. Lₙ)des Referenzkammspektrums (L) erzeugten Überlagerungssignals (U₁, U₂, ... bzw. Uₙ) derart, daß eine in diesem Überlagerungssignal (U₁, U₂, ... bzw. Uₙ) Frequenzänderung (Δ fₐ) der Kanalträgerfrequenz (f₁, f₂, ... bzw. fₙ) aufgehoben wird, vorgesehen ist,
**dadurch gekennzeichnet,**
- daß das von jedem Sender (1, 2, ... bzw. n) einer Gruppe (10) aus mehreren räumlich benachbarten Sendern (1, 2, .. n) emittierte frequenzmodulierte Informationssignal (S₁, S₂, ...bzw. Sₙ) zusätzlich mit einem periodischen Kennungsnsignal (KS₁, KS₂, ... bzw. KSₙ) einer diesem Sender (1, 2, ... bzw. n) individuell zugeordneten festen Wiederholfrequenz (fₖ₁, fₖ₂, ... bzw. fₖₙ) zur Identifizierung des Trägerfrequenzkanals dieses Senders (1, 2, ...bzw. n) frequenzmoduliert ist,
- daß eine dieser Gruppe (10) Sender (1, 2, ... n) gemeinsam zugeordnete kohärent optische Überlagerungseinrichtung (2) zum Empfang der Anteile (s₁, s₂, ... sₙ) der von allen Sendern (1, 2, ... n) dieser Gruppe (10) auf verschiedenen Kanalträgerfrequenzen (f₁, f₂,... fₙ) emittierten Informationssignale (S₁, S₂, ...Sₙ) und zum Erzeugen eines aus einzelnen Überlagerungssignalen (U₁, U₂, ..., Uₙ) bestehenden Mehrfachüberlagerungssignals (U) vorgesehen ist, wobei die einzelnen Überlagerungssignale (U₁, U₂, ..., Uₙ) durch Überlagerung des Anteils (s₁, s₂, ... bzw. sₙ) jedes dieser Informationssignale (S₁, S₂, ..., Sₙ) mit dem Licht der bei der Kanalträgerfrequenz (f₁, f₂,...bzw. fₙ) dieses Informationssignals (S₁, S₂, ... bzw. Sₙ) liegenden Referenzfrequenzlinie (L₁, L₂, ... bzw. Lₙ) des dieser Gruppe (10) Sender (1, 2, ...n) zugeordneten und bei jeder Kanalträgerfrequenz (f₁, f₂,...bzw. fₙ) jedes Senders (1, 2, ... bzw. n) dieser Gruppe (10) jeweils eine Referenzfrequenzlinie (L₁, L₂, ... bzw. Lₙ) aufweisenden Referenzkammspektrums (L) gebildet sind, und
- daß die Kontrolleinrichtung (3)
- eine mit dem Mehrfachüberlagerungssignal (U) oder einem entsprechenden, nach einer optoelektrischen Wandlung gewonnenen Mehrfachüberlagerungssignal beaufschlagte Filtereinrichtung (30), welche für die in dem Mehrfachüberlagerungssignal (U) enthaltenen Wiederholfrequenzen (fₖ₁, fₖ₂, ... fₖₙ) der Kennungssignale (KS₁, KS₂, ...KSₙ) und Frequenzänderungen (Δfₐ) der Kanalträgerfrequenzen (f₁, f₂, ... fₙ), nicht aber für die höheren sonstigen in dem Mehrfachüberlagerungssignal (U) enthaltenen Frequenzen einschließlich der Kanalträgerfrequenzen (f₁, f₂, ...fₙ) der Trägerfrequenzkanäle der Sender (1, 2, ... n) dieser Gruppe (10) und der Modulationsfrequenzen (fₘ) der frequenzmodulierten Informationssignale (S₁, S₂, ... Sₙ) durchlässig ist und ein eine Information über diese Wiederholfrequenzen (fₖ₁, fₖ₂, ...fₖₙ), diese Frequenzänderungen (Δfₐ) und die Zuordnung dieser Frequenzänderungen (Δfₐ) zu diesen Wiederholfrequenzen (fₖ₁, fₖ₂, ...fₖₙ₎ enthaltendes Filtersignal (FS) abgibt, und
- eine Steuereinrichtung (34) zur Erzeugung je eines Steuersignals (SS₁, SS₂, ... bzw. SSₙ) für jeden Sender (1, 2, ... bzw. n) dieser Gruppe (10) zur Steuerung der Kanalträgerfrequenz (f₁, f₂, ... bzw.fₙ) dieses Senders (1, 2, ... bzw. n) in Abhängigkeit von der in dem Filtersignal (FS) enthaltenen Information über die Wiederholfrequenz (fₖ₁, fₖ₂, ... bzw. fₖₙ) dieses Senders (1, 2, .. bzw. n) und über die dieser Wiederholfrequenz (f₁, f₂, ... bzw.fₙ) zugeordnete Frequenzänderung (Δfₐ) der Kanalträgerfrequenz (f₁, f₂, ... bzw.fₙ) dieses Senders (1, 2, ... n)derart, daß eine vorhandene Frequenzänderung (Δfₐ) der Kanalträgerfrequenz (f₁, f₂, ... bzw.fₙ) dieses Senders (1, 2, ...bzw. n) aufgehoben wird, aufweist.

2. Anordnung nach Anspruch 1, **dadurch gekennzeichnet,**
daß die Filtereinrichtung (30)
- ein mit dem Mehrfachüberlagerungssignal (U) oder dem entsprechend optoelektrisch gewandelten Mehrfachüberlagerungssignal beaufschlagtes Filter (31), welches für die in dem Mehrfachüberlagerungssignal (U) enthaltenen Wiederholfrequenzen (fₖ₁, fₖ₂, ... fₖₙ) Kennungssignale (KS₁, KS₂, ...bzw. und die Frequenänderungen (Δfₐ) der Kanalträgerfrequenzen (f₁, f₂, ... bzw.fₙ), nicht aber für die höheren sonstigen in dem Mehrfachüberlagerungssignal (U) enthaltenen Frequenzen einschließlich der Kanalträgerfrequenzen (f₁, f₂, ...fₙ) und der Modulationsfrequenzen (fₘ) der Informationssignale (S₁, S₂, ... Sₙ) durchlässig ist und ein diese Wiederholfrequenzen (fₖ₁, fₖ₂, ...fₖₙ) und diese Frequenänderungen (Δfₐ) enthaltendes gefiltertes Signal (GS) abgibt,
- einen Wandler (32) zum Umwandeln des gefilterten Signals (GS) in ein Amplitudensignal (AS) mit einer von den in dem gefilterten Signal (GS) enthaltenen Frequenzabweichungen (Δfₐ) der Kanalträgerfrequenzen (f₁, f₂, ... fₙ) und den erholfrequenzen (fₖ₁, fₖ₂, ... fₖₙ) der Kennungssignale (KS₁, KS₂, ... KSₙ) abhängigen Amplitude (A) und/oder Phase (φ),
- eine Einrichtung (33) zur Erzeugung des Filtersignals (FS) in Form einer Fourier-Transformierten des Amplitudensignals (AS) mit den Wiederholfrequenzen (fₖ₁, fₖ₂, ... fₖₙ) eindeutig zugeordneten Fourier-Koeffizienten (a₁, a₂, ...bzw. aₙ), wobei jeder Fourier-Koeffizient (a₁, a₂, ...bzw.aₙ) eine Information über eine Frequenzabweichung (Δfₐ) der zur Wiederholfrequenz (fₖ₁, fₖ₂, ... bzw. fₖₙ) dieses Fourier-Koeffizienten (a₁, a₂, ...bzw. aₙ) gehörenden Kanalträgerfrequenz (f₁, f₂, ... bzw. fₙ) enthält, aufweist.

3. Anordnung nach Anspruch 2,
**dadurch gekennzeichnet,**
daß der Wandler (32) für jedes einzelne Überlagerungssignal (U₁, U₂, ... Uₙ) jedes Senders (1, 2, ... bzw. n) jeder Gruppe (10) eine Wandlercharakteristik (35) aufweist, bei welcher die Amplitude (A) des vom Wandler (32) abgegebenen Amplitudensignals (AS) sowohl bei gegenüber jeder Kanalträgerfrequenz (f₁, f₂, ... bzw. fₙ) zunehmender als auch bei der gegenüber abnehmender Modulationsfrequenz (fₘ) des von diesem Sender (1, 2, ... bzw. n) emittierten Informationssignals (S₁, S₂, ... bzw. Sₙ) monoton mit der Zunahme als auch der Abnahme dieser Modulationsfrequenz (fm) ansteigt.

4. Anordnung nach Anspruch 3,
**dadurch gekennzeichnet,**
daß die Wandlercharakteristik (35) des Wandlers (32) bei bestimmten Frequenzabständen (fₘ₀, fₘ₁) der Modulationsfrequenz (fₘ) jedes von einem Sender (1, 2, ... n) emittierten Informationssignals (S₁, S₂, ... bzw. Sₙ) von der Kanalträgerfrequenz (f₁, f₂, ... bzw. fₙ) dieses Senders (1, 2, ... n) die gleiche Amplitude (A₀) aufweist.

5. Anordnung nach einem der vorhergehenden Ansprüche,
**dadurch gekennzeichnet,**
daß in sämtlichen einzelnen Überlagerungssignalen (U₁, U₂, ... bzw. Uₙ) enthaltene Zwischenfrequenzen (f_{ZF1}, f_{ZF2}, ...bzw. f_{ZFn}), die jeweils gegeben sind durch eine Differenz zwischen der Kanalträgerfrequenz (f₁, f₂, ... bzw. fₙ) und der Referenzfrequenz (f₀₁, f₀₂, ... bzw. f₀ₙ) jedes einzelnen Überlagerungssignals (U₁, U₂, ...bzw. Uₙ), untereinander gleich sind.

6. Anordnung nach einem der vorhergehenden Ansprüche,
**dadurch gekennzeichnet,**
daß das Kennungssignal (KS₁, KS₂, ... bzw. KSₙ) des Trägerfrequenzkanals eines Senders (1, 2, ... bzw. n) eine Grundwelle der Wiederholfrequenz (fₖ₁, fₖ₂, ... bzw. fₖₙ) und zumindest eine Oberwelle der doppelten Wiederholfrequenz (2fₖ₁, 2fₖ₂, ... bzw. 2fₖₙ) enthält.

7. Anordnung nach Anspruch 6,
**dadurch gekennzeichnet,**
daß das Kennungssignal (KS₁, KS₂, ... bzw. KSₙ) des Trägerfrequenzkanals eines Senders (1, 2, ... bzw. n) eine rechteckförmige Welle ist.

8. Anordnung nach einem der vorhergehenden Ansprüche,
**gekennzeichnet durch,**
einen Kammgenerator (4) zur Erzeugung des Referenzkammspektrums (L).

9. Anordnung nach Anspruch 8,
**dadurch gekennzeichnet,**
daß für mehrere kohärent optische Überlagerungseinrichtungen (2, 20), die verschiedenen Gruppen (10) räumlich benachbarter Sender (1, 2, ... n) oder einem oder mehreren von einer Gruppe (10) solcher Sender (1, 2, ... n) räumlich weiter entfernten Sendern (11, ... 1p) zugeordnet sind, ein gemeinsamer Kammgenerator (4) zur Erzeugung eines Referenzfrequenzlinien (L₁, L₂, ... Lₙ, L₁₁, ...L₁ₚ) mit Referenzfrequenzen (fₖ₁, fₖ₂, ... fₖₙ, fₖ₁₁, ...fₖ₁ₚ) für die Kanalträgerfrequenzen sämtlicher Sender (1, 2, ... n, 11, ...1p) enthaltenden Referenzkammspektrums (L) vorgesehen ist.
